# EUROPÄISCHE PATENTSCHRIFT

(11) **EP 2 518 350 B1**
(45) Veröffentlichungstag und Bekanntmachung des Hinweises auf die Patenterteilung: **19.07.2017**
(21) Anmeldenummer: 12164998.2
(22) Anmeldetag: 20.04.2012
(51) Int. Cl.: F16C 29/08

(54) **Konzept zum Abdichten einer Linearführung**
Concept for sealing a linear guide
Concept d'étanchéification d'un guidage linéaire

(30) Priorität: 29.04.2011 DE 102011017757
(43) Veröffentlichungstag der Anmeldung: 31.10.2012
(73) Patentinhaber: Aktiebolaget SKF, 415 50 Göteborg (SE)
(72) Erfinder: Edelmann, Ludwig, 97717 Sulzthal (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Schonecke, Mitja

(56) Entgegenhaltungen:
- DE-A1- 3 606 886
- DE-A1- 4 024 686
- US-A- 5 772 333
- US-A1- 2003 205 445

## Beschreibung

Die Erfindung betrifft eine Vorrichtung und ein Verfahren zum Abdichten von Linearführungen.
Unter einer Linearführung versteht man im Allgemeinen eine Anordnung, die eine möglichst reibungsfreie Translation einer oder mehrerer beweglicher Baugruppen einer Maschine ermöglicht und dabei gleichzeitig eine Einhaltung der Bewegungsrichtung in Form einer linearen Bahn garantiert. Man kann Linearführungen nach ihrer Lagerung in Gleitführungen und Wälzführungen unterteilen. Wälzführungen beruhen auf dem Prinzip der Umwälzung von Wälzkörpern zwischen zwei bewegten Führungselementen. Als Wälzkörper dienen wie beim Wälzlager beispielsweise Kugeln, Rollen, Nadeln oder andere Wälzkörper. Zu den Wälzführungen gehören u. a Profilschienenführungen oder auch Linearführungen.

Bei Profilschienenführungen umgreifen sogenannte Führungs- oder Laufwagen mit einem im Wesentlichen U-förmigen Querschnitt eine Führungs- bzw. Profilschiene. Der Führungswagen ist dabei auf der Führungsschiene wälzgelagert. In anderen Worten ausgedrückt bildet der Führungswagen einen äußeren Führungsteil der Linearführung und die Führungsschiene einen inneren Führungsteil der Linearführung, wobei sich inneres und äußeres Führungsteil gegenseitig über Wälzkörper abstützen.
Wie erwähnt, kommen zur Führung des Wagens bzw. Schlittens neben Gleitführungen in der Regel Wälzführungen zum Einsatz, welche Reibungswiderstände stark herabsetzen können. Zur weiteren Absenkung des Reibungswiderstandes und zur Verschleißminderung erfolgt eine Schmierung, wozu sich auf den Laufflächen der Profilschiene als auch den Wälzkörpern ein dünner Schmier- bzw. Fettfilm befindet, der auch zusammenfassend als Schmiermittelfilm bezeichnet wird. Konstruktiv wird zwischen linearer Lager- oder linearer Führungseinrichtungen mit geschlossenem Wälzkörperumlauf für unbegrenzte Längsbewegungen entlang der Profilschiene, sowie Schienenführungen ohne Wälzkörperrückführung für begrenzte Verfahr bzw. Verschiebewege unterschieden. Zur Schmierung ist auch ein entsprechendes Schmiermittelreservoir am Wagen vorgesehen. Dieses sollte gut abgedichtet sein, um einen stets gegebenen Schmierstoffaustritt aus der Linearführung gering zu halten. Hierzu weist in der Regel der Wagen an einer, jedoch üblicherweise an beiden Stirnseiten, die über jeweilige Kopfstücke bzw. Endplatten abgeschlossen sind, einen lösbar angeordneten (Front-) Abstreifer auf, der die Stirnseite abschließt und über eine Dichtung abdichtet.

Bei in Linearführungen verwendeten Dichtungen stehen eine durch eine Dichtung erzielte Abstreifwirkung und eine durch sie verursachte Reibung im Gegensatz zueinander. Bei manchen Anwendungen steht eher eine geringere Reibung als eine hohe Dichtwirkung im Vordergrund. Bei wiederum anderen Anwendungen wird hingegen eine bessere bzw. höhere Dichtwirkung gewünscht, wohingegen eine durch die Dichtung verursachte Reibung zwischen Führungswagen und Profilschiene nebensächlich ist.

Als nächstkommenden Stand der Technik offenbart die US 5 772333 A einen Führungswagen für eine Linearführung.

Eine Aufgabe der vorliegenden Erfindung besteht nun darin, ein verbessertes Konzept zum Abdichten von Linearführungen bereitzustellen, welches eine gewisse Flexibilität und Austauschbarkeit zwischen Abstreifwirkung und Reibung der eingesetzten Dichtungen ermöglicht.

Die Aufgabe wird durch die Merkmale des Anspruchs 1 und durch die Merkmale des Anspruchs 8 gelöst.
Ausführungsbeispiele der vorliegenden Erfindung sehen vor, Dichtungen für eine Profilschiene zustellbar, also entlang der Verschiebe- bzw. Verfahrrichtung verschiebbar derart auszuführen, dass eine Abdichtwirkung einstellbar ist. Gemäß Ausführungsbeispielen wird eine Linearführung durch Anordnen eines Dichtelements, das auf einer ersten Seite wenigstens eine Dichtlippe umfasst und eine der ersten Seite abgewandte keilförmige zweite Seite aufweist, abgedichtet, welches zwischen einer Führungsschiene und einem Führungswagen in einer dafür vorgesehenen Führung des Führungswagens angeordnet ist. Daraufhin kann eine vorbestimmte Dichtwirkung des Dichtelements durch Betätigen eines Stellglieds zur Festlegung einer der vorbestimmten Dichtwirkung entsprechenden Position des Dichtelements innerhalb der Führung in Verschieberichtung der Linearführung herbeigeführt werden.

Dazu umfasst die Erfindung ein Dichtelement für eine Linearführung, das wenigstens eine Dichtlippe aufweist, die auf einer ersten Seite des Dichtelements angeordnet ist, und die ausgebildet ist, um zu einer Führungsschiene der Linearführung hin abzudichten. Eine der ersten Seite abgewandte zweite Seite des Dichtelements ist keilförmig ausgebildet, um durch eine Positionierung des Dichtelements in einer dafür vorgesehenen Führung eine der Positionierung entsprechende vorbestimmte Dichtwirkung bzw. Abstreifwirkung der wenigstens einen Dichtlippe zu erzielen.
Obwohl grundsätzlich zahlreiche Formgebungen der Dichtlippe denkbar sind, ist die Dichtlippe gemäß einem bevorzugten Ausführungsbeispiel ausgebildet, um einen federartigen Vorsprung der Führungs- bzw. Profilschiene nutartig, d.h. U-förmig oder bügelartig, zu umgreifen und damit die Dichtwirkung zu erzielen.

Eine Stirn- oder Keilendfläche des Dichtelements kann ausgebildet sein, um mit einem stirnseitig zu dem Dichtelement angeordneten Stellglied zusammenzuwirken, um das Dichtelement in der dafür vorgesehenen Führung in einer Verfahr- bzw. Verschieberichtung der Linearführung in eine vorbestimmte Position zu bringen.

Wie für Dichtungen üblich, kann das Dichtelement aus einem elastischen Dichtmaterial, wie beispielsweise einem Gummi, gefertigt sein.

Ausführungsbeispiele der vorliegenden Erfindung sehen auch einen Führungswagen für eine Linearführung vor, wobei in dem Führungswagen eine Führung für das Dichtelement vorgesehen ist, und wobei die Führung einen keilförmigen Führungsabschnitt aufweist, dessen Keilform entgegen der keilförmigen Seite des Dichtelements ausgebildet ist, um mit der keilförmigen Seite des Dichtelements derart zusammenwirken zu können, dass durch eine Positionierung des Dichtelements in der Führung eine der Positionierung entsprechende vorbestimmte Dichtwirkung zu einer Führungsschiene der Linearführung hin erzielt werden kann.

An einer stirnseitigen Endplatte des Führungswagens ist ein Stellglied, wie beispielsweise eine Schraube, derart angeordnet, um durch Druck des Stellglieds auf die Stirnfläche des Dichtelements das Dichtelement in der Dichtungsführung in Verschieberichtung der Linearführung in eine vorbestimmte Position, entsprechend einer vorbestimmten Dichtwirkung, zu bringen. Durch Betätigen bzw. Verdrehen des Stellglieds kann das Dichtelement somit in die Dichtungsführung des Führungswagens hinein- oder herausbewegt werden, wobei durch die zusätzliche Keilform des Dichtelements und der Dichtungsführung unterschiedlich starke Dicht- bzw. Abstreifwirkungen gegenüber der Profilschiene erreicht werden können.

Ferner sehen Ausführungsbeispiele auch eine Linearführung mit einer Führungsschiene und einem darauf gelagerten Führungswagen vor, wobei zum Abdichten der Linearführung zwischen dem erfindungsgmäßen Führungswagen und der Führungsschiene wenigstens ein Dichtelement gemäß einem Ausführungsbeispiel vorgesehen ist.

Durch die mittels einer Keilfläche am Rücken der Dichtung und einem entsprechenden Zustellelement zustellbar ausgebildeten Dichtungen kann eine gewünschte Dichtwirkung frei eingestellt werden. Dichtungen gemäß Ausführungsbeispielen können beispielsweise in einer Endplatte eines Profilschienenwagens oder eines dazu stirnseitig angebrachten Schmiermittelaufsatzes angebracht werden.

In vorteilhafter Weise kann dadurch eine gewünschte Dichtwirkung zwischen Führungswagen und Profilschiene frei eingestellt werden. Alternativ oder zusätzlich kann ein Dichtungsverschleiß durch eine entsprechende Nachjustierung mittels des Zustellelementes bzw. des Stellglieds kompensiert werden. Bei einer einseitigen Belastung eines Linearsystems, wie sie beispielsweise dann auftreten kann, wenn Profilschiene samt dem darauf geführten Führungswagen aus einer Horizontalen, um beispielsweise 90° verkippt, also hochkant, geführt werden, kann mittels eines Ausführungsbeispiels auch nur eine Dichtung angestellt werden und somit abstreifen, während die andere, gegenüberliegende Dichtung mit einem Spalt, d.h. ohne Kontakt und damit ohne Reibverluste mitläuft. Eine derartige Vorgehensweise kann gegebenenfalls zur Energieeffizienzsteigerung dienen.

Weitere vorteilhafte Ausführungsformen und Weiterbildungen sind Gegenstand der abhängigen Ansprüche und der nachfolgenden detaillierten Beschreibung.

Ausführungsbeispiele der vorliegenden Erfindung werden nachfolgend anhand der beiliegenden Figuren näher erläutert. Es zeigen:
- Fig. 1: ein Dichtelement für eine Linearführung gemäß einem Ausführungsbeispiel der vorliegenden Erfindung;
- Fig. 2: eine Linearführung mit einer Führungsschiene und einem darauf gelagerten Führungswagen, wobei zum Abdichten der Linearführung zwischen den Führungswagen und der Führungsschiene wenigstens ein Dichtelement gemäß einem Ausführungsbeispiel der vorliegenden Erfindung vorgesehen ist; und
- Fig. 3: eine schematische Darstellung zweier entgegengerichteter Keilformen.

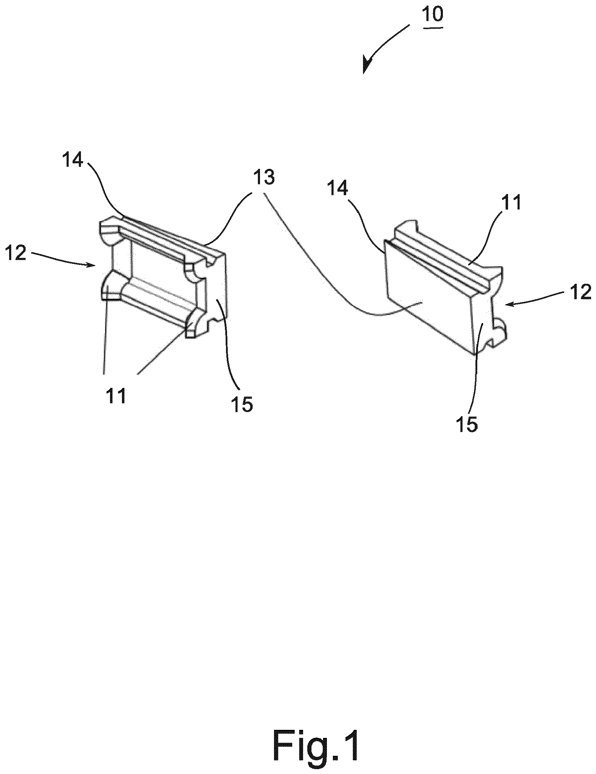

Fig. 1 zeigt aus unterschiedlichen Perspektiven ein Dichtelement 10 für eine Linearführung gemäß einem Ausführungsbeispiel der vorliegenden Erfindung.

Das Dichtelement 10 weist wenigstens eine Dichtlippe 11 auf, welche auf einer ersten Seite 12 des Dichtelements angeordnet ist. Dabei ist die Dichtlippe 11 ausgebildet, um zu einer Führungsschiene (nicht gezeigt in Fig. 1) der Linearführung hin abzudichten. Eine der ersten Seite 12 abgewandte bzw. gegenüberliegende zweite Seite 13 des Dichtelements 10 ist keilförmig ausgebildet, so dass durch eine Positionierung des Dichtelements 10 in einer dafür vorgesehenen Führung (nicht dargestellt in Fig. 1) eine der Positionierung entsprechende Dicht- bzw. Abstreifwirkung der wenigstens einen Dichtlippe 11 erzielt werden kann. Für die Keilform des Dichtelements 10 laufen die erste Seite 12 und die zweite Seite 13 an einer Keilspitze 14 in einem spitzen Winkel zusammen.

Die wenigstens eine Dichtlippe bzw. Dichtkante 11 kann verschiedene, möglichst zu einer Führungs- oder Profilschiene komplementär ausgebildete Formen aufweisen. Gemäß dem in Fig. 1 gezeigten Ausführungsbeispiel sind Dichtlippen 11 der ersten Seite 12 ausgebildet, um einen federartigen Vorsprung der Führungs- bzw. Profilschiene im Wesentlichen nutartig zu umgreifen. Das heißt, dass die Dichtlippen 11 einen im Wesentlichen U-förmigen oder bügelartigen Querschnitt aufweisen können. Um eine gute Dichtwirkung bei gleichzeitig relativ geringer Reibung erzielen zu können, können die Dichtlippen 11 in ihren End- oder Eckbereichen verstärkt oder leicht verlängert ausgebildet sein, derart, wie es in Fig. 1 angedeutet ist.

Das keilförmig ausgebildete Dichtelement 10 weist auf einem gegenüberliegenden Ende der Keilspitze 14, d.h. an einem Keilende, eine Stirnfläche 15 auf, um mit einem stirnseitig dazu angeordneten Stellglied (nicht dargestellt) zusammenwirken zu können, und das Dichtelement 10 in einer dafür vorgesehenen Führung in Verschiebe- bzw. Verfahrrichtung der Linearführung in eine vorbestimmte Position zu bringen.

Gemäß Ausführungsbeispielen kann entweder das gesamte Dichtelement 10 einstückig aus einem elastischen Material, wie beispielsweise einem elastischen Kunststoff bzw. Gummi, gefertigt sein. Gemäß anderen Ausführungsbeispielen ist es aber auch möglich, dass lediglich die wenigstens eine angeformte Dichtlippe 11 aus einem elastischen Dichtmaterial gefertigt ist und der keilförmige Grundkörper stattdessen beispielsweise aus einem, mittels Spritzguss gefertigten, Kunststoff hergestellt ist.

Abweichend von der in Fig. 1 angedeuteten Form des Dichtelements 10 kann dieses grundsätzlich auch eine andere Querschnittsgeometrie aufweisen. Beispielsweise könnte das Dichtelement 10 nicht nur zu einer Seite einer Führungs- bzw. Profilschiene hin abdichten, sondern auch zu zwei, oder, entsprechend einem U-förmigen Abstreifer, zu drei Seiten hin. Eine Keilform von den Dichtlippen 11 abgewandten Seiten bleibt dabei aber grundsätzlich erhalten, um die zustellbare Anpress-, Abstreif- und/oder Dichtwirkung zu erzielen.

Konventionell wird diesem Spannungsfeld aus Abstreifwirkung und Reibung begegnet, indem üblicherweise Dichtungen mit verschiedenen Vorspannungen und/oder aus unterschiedlichem Material - je nach gewünschtem Anforderungsprofil - verwendet werden.

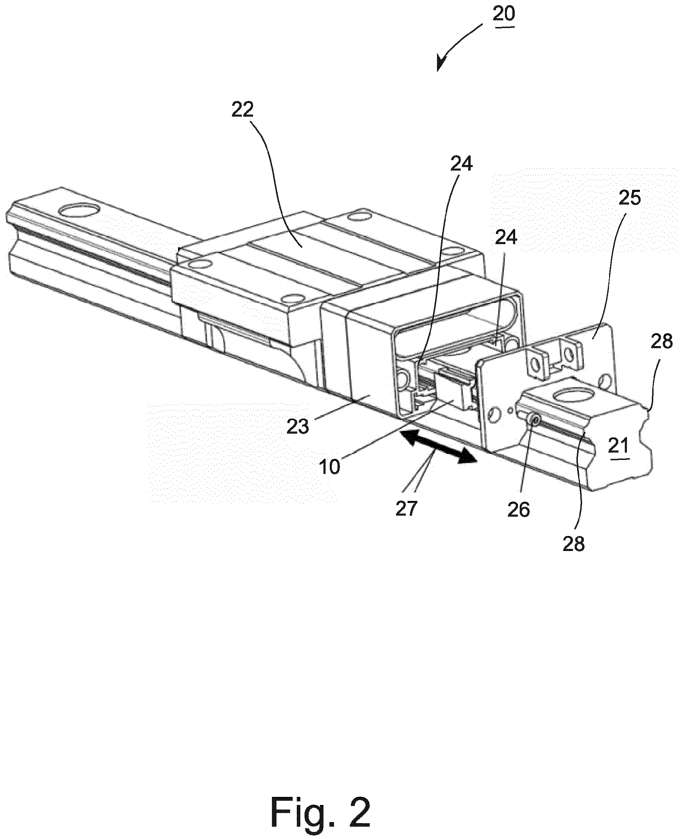

Nachdem im Vorhergehenden verschiedene Ausführungsbeispiele eines keilförmig ausgebildeten Dichtelements 10 näher beschrieben und erläutert wurden, wird im Nachfolgenden der Einsatz eines derartigen Dichtelements in einem Linearsystem bzw. in einem Führungswagen oder -schlitten für ein derartiges System, näher erläutert. Dazu zeigt Fig. 2 eine Linearführung 20 mit einer Führungsschiene 21 und einem darauf geführten Führungswagen 22, wobei zum Abdichten zwischen dem Führungswagen 22 und der Führungsschiene 21 wenigstens ein Dichtelement 10 gemäß einem Ausführungsbeispiel der vorliegenden Erfindung vorgesehen ist.

An dem Führungswagen 22 ist stirnseitig ein so genannter Nachschmieraufsatz 23 angebracht, welcher zusammen mit dem Führungswagen 22 auf der Führungsschiene 21 linear hin und her bewegt werden kann. Auch wenn der Nachschmieraufsatz 23 im Allgemeinen nicht selbstständig wälzgelagert auf der Führungsschiene 21 hin und her bewegt wird, so soll er im vorliegenden Kontext als Führungswagen, d.h. als ein die Führungs- bzw. Profilschiene 21 bügelartig umgreifendes äußeres Führungsteil, verstanden werden.

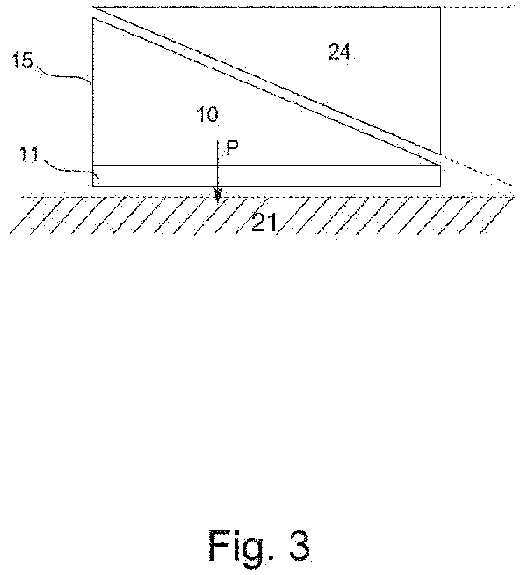

Wie es in Fig. 2 gezeigt ist, umfasst der als Führungswagen zu interpretierende Nachschmieraufsatz 23 links- und rechtsseitig der Profilschiene 21 jeweils eine Führung 24 für das Dichtelement 10. Obwohl es aus der Fig. 2 nicht explizit hervorgeht, weist jede der Dichtungsführungen 24 einen keilförmigen Führungsabschnitt auf, dessen Keilform entgegen der des Dichtelements 10 ausgebildet ist, um mit der keilförmigen Seite 13 des Dichtelements 10 zusammenwirken zu können. Dabei meint "entgegengesetzte Keilform", dass beim Einführen des Dichtelements 10 in die Führung 24 die Keilspitzen des Führungsabschnitts 24 und des Dichtelements 10 aufeinander zu zeigen, wohingegen die entsprechenden Keilenden in entgegengesetzte Richtungen entlang der Führungsschiene 21 zeigen. Dieses Prinzip ist in der Fig. 3 schematisch dargestellt.

Das Dichtelement 10 wird dabei so in die Dichtungsführung 24 eingeführt, dass die wenigstens eine Dichtlippe 11 des Dichtelements zur Profilschiene 21 hin abdichten kann. In dem in Fig. 2 gezeigten Beispiel umgreift die wenigstens eine Dichtlippe 11 einen wälzkörperlaufbahnbildenden Vorsprung 28 der Profilschiene 21 quasi nutartig.

An einer stirnseitigen Endplatte 25 des Führungswagens 22, 23 kann ein Stellglied 26 derart angeordnet sein, um mittels eines durch das Stellglied 26 auf die Stirnfläche 15 des Dichtelements 10 ausgebübten Drucks das Dichtelement 10 in der Führung 24 in Verschiebe- bzw. Verfahrrichtung der Linearführung 20 in eine vorbestimmte Position, entsprechend einer vorbestimmten Abstreif- oder Dichtwirkung, zu bringen.

Dazu könnte das Stellglied 26 beispielsweise als Schraube ausgebildet sein, um durch Verdrehen der Schraube 26 das Dichtelement 10 in die dafür vorgesehene Führung 24 des Führungswagens 23 hinein- oder heraus zu bewegen. Wird das Dichtelement 10 durch die Schraube 26 beispielsweise in die Führung 24 hinein gedrückt, so erhöht sich durch die gegeneinander laufenden Keilflächen des Dichtelements 10 und der Führung 24 ein senkrecht zur Profilschiene 21 gerichteter Anpressdruck P des Dichtelements 10 und damit der Dichtlippe 11 (siehe Fig. 3). Durch Herausdrehen der Schraube 26 in entgegengesetzter Richtung kann sich das Dichtelement 10, insbesondere durch die entgegengesetzt verlaufenden Keilflächen des Dichtelements 10 und der Führung 24, selbstständig, mit Hilfe von Reibungskräften oder anderen Kräften wieder aus der Führung heraus bewegen, wodurch gleichzeitig der Anpressdruck P des Dichtelements 10 senkrecht zur Verschieberichtung verringert wird.

Obwohl vorliegend beispielhaft Schrauben als Stellglied 26 beschrieben werden, sind selbstverständlich auch andere Ausführungsformen von ventilartigen Stellgliedern, wie beispielsweise Druckstifte, Federn oder dergleichen, vorstellbar.

Zusammenfassend ist bei der erfindungsgemäßen Linearführung gemäß Fig. 2 das Dichtelement 10 zwischen dem Führungswagen 22, 23 und der Führungsschiene 21 in eine dafür vorgesehenen Dichtungsführung 24 des Führungswagens angeordnet, wobei die Dichtungsführung 24 einen keilförmigen Führungsteil oder -abschnitt aufweist, dessen Keilform entgegen, also komplementär zu der keilförmigen Seite 13 des Dichtelements 10 ausgebildet ist, und wobei an einer stirnseitigen Endplatte 25 des Führungswagens 20, 23 ein Stellglied 26 derart angeordnet ist, um durch Druck auf die Stirnfläche 15 des Dichtelements 10 das Dichtelement 10 in der Führung 24 in Verschieberichtung 27 der Linearführung 20 in eine vorbestimmte Position entsprechend einer vorbestimmten Dichtwirkung zu bringen.

Bei dem vorgeschlagenen erfindungsgemäßen Konzept werden also gemäß Ausführungsbeispielen Dichtungen 10 für die Profilschiene 21 zustellbar ausgeführt. Dies kann beispielsweise durch eine Keilfläche 13 am Rücken der Dichtung 10 und einem Zustellelement 26, wie z. B. einer Schraube, bewerkstelligt werden. Implementiert man dies in einer Endplatte 25 eines Profilschienenwagens 22 oder, wie in Fig. 2 dargestellt, in einem Schmiermittelaufsatz 23, kann ein Nutzer eine gewünschte Dichtwirkung selbst einstellen. Weiter kann mit dem vorgeschlagenen Konzept vorteilhaft Verschleiß durch entsprechende Nachjustierung über die Stellschraube 26 kompensiert werden.

### Bezugszeichenliste

- 10: Dichtelement gemäß einem Ausführungsbeispiel
- 11: Dichtlippe
- 12: erste Seite des Dichtelements
- 13: zweite Seite des Dichtelements
- 14: Keilspitze
- 15: Stirnseite des Dichtelements
- 20: Linearführung gemäß einem Ausführungsbeispiel
- 21: Führungs- bzw. Profilschiene
- 22: Führungswagen
- 23: Nachschmieraufsatz
- 24: Führung mit keilförmigen Führungsabschnitt
- 25: Endplatte des Führungswagens
- 26: Stellglied
- 27: Zustellrichtung der Dichtung / des Abstreifers
- 28: federartiger Vorsprung der

## Patentansprüche

1. Ein Führungswagen (22; 23) für eine Linearführung (20), wobei an dem Führungswagen (22; 23) eine Führung (24) für ein Dichtelement (10) vorgesehen ist, wobei das Dichtelement (10)
wenigstens eine Dichtlippe (11) umfasst, die auf einer ersten Seite (12) des Dichtelements angeordnet ist, und die ausgebildet ist, um zu einer Führungsschiene (21) der Linearführung (20) hin abzudichten; und
eine der ersten Seite (12) abgewandte zweite Seite (13) des Dichtelements, welche keilförmig ausgebildet ist, um durch eine Positionierung des Dichtelements (10) in einer dafür vorgesehenen Führung (24) eine der Positionierung entsprechende vorbestimmte Dichtwirkung der wenigstens einen Dichtlippe (11) zu erzielen,
wobei die Führung (24) einen keilförmigen Führungsabschnitt aufweist, dessen Keilform entgegen der keilförmigen Seite (13) des Dichtelements (10) ausgebildet ist, um mit der keilförmigen Seite des Dichtelements derart zusammenwirken zu können, dass durch eine Positionierung des Dichtelements (10) entlang einer Verschieberichtung in der Führung (24) eine der Positionierung entsprechende vorbestimmte Dichtwirkung zu einer Führungsschiene (21) der Linearführung (20) hin erzielt werden kann,
wobei an einer stirnseitigen Endplatte (25) des Führungswagens (22; 23) ein Stellglied (26) derart angeordnet ist, um durch Druck des Stellglieds (26) auf eine Stirnfläche des Dichtelements (10) das Dichtelement in der Führung (24) in Verschieberichtung der Linearführung (20) in eine vorbestimmte Position entsprechend einer vorbestimmten Dichtwirkung zu bringen.

2. Der Führungswagen (22; 23) nach Anspruch 1, wobei die wenigstens eine Dichtlippe (11) ausgebildet ist, um einen federartigen Vorsprung (28) der Führungsschiene (21) nutartig zu umgreifen.

3. Der Führungswagen (22; 23) nach einem der vorhergehenden Ansprüche, wobei eine Stirnfläche (15) des Dichtelements (10) ausgebildet ist, um mit einem stirnseitig angeordneten Stellglied (26) zusammenwirken zu können, um das Dichtelement (10) in der dafür vorgesehenen Führung (24) in Verschieberichtung der Linearführung (20) in eine vorbestimmte Position zu bringen.

4. Der Führungswagen (22; 23) nach einem der vorhergehenden Ansprüche, wobei das Dichtelement aus einem elastischen Material, insbesondere einem Gummi, gefertigt ist.

5. Der Führungswagen (22; 23) nach einem der vorhergehenden Ansprüche, wobei das Stellglied (26) eine Schraube ist, durch deren Verdrehen das Dichtelement (10) in die Führung (24) hinein- oder herausbewegt werden kann.

6. Eine Linearführung (20) mit einer Führungsschiene (21) und einem darauf gelagerten Führungswagen (22; 23), wobei zum Abdichten der Linearführung zwischen dem Führungswagen (22; 23) und der Führungsschiene (21) wenigstens ein Führungswagen (22; 23) nach einem der Ansprüche 1 bis 5 vorgesehen ist.

7. Die Linearführung (20) nach Anspruch 6, wobei das Dichtelement (10) zwischen dem Führungswagen (22; 23) und der Führungsschiene (21) in einer davor vorgesehenen Führung (24) des Führungswagens (22; 23) angeordnet ist, und wobei die Führung (24) einen keilförmigen Führungsteil aufweist, dessen Keilform entgegen der keilförmigen Seite des Dichtelements ausgebildet ist, und wobei an einer stirnseitigen Endplatte (25) des Führungswagens (22; 23) ein Stellglied (26) derart angeordnet ist, um durch Druck auf eine Stirnfläche (15) des Dichtelements (10) das Dichtelement in der Führung (24) in Verschieberichtung der Linearführung in eine vorbestimmte Position entsprechend einer vorbestimmten Dichtwirkung zu bringen.

8. Ein Verfahren zum Abdichten einer Linearführung (20), mit folgenden Schritten:
Anordnen eines Dichtelements (10) mit wenigstens einer Dichtlippe (11) auf einer ersten Seite (12) und mit einer der ersten Seite (12) abgewandten keilförmigen zweiten Seite (13) des Dichtelements (10) zwischen einer Führungsschiene (21) und einem Führungswagen (22; 23) in einer dafür vorgesehenen Führung (24) des Führungswagens; und
Herbeiführen einer vorbestimmten Dichtwirkung des Dichtelements (10) durch Betätigen eines Stellglieds (26) das an einer stirnseitigen Endplatte (25) des Führungswagens (22; 23) derart angeordnet ist, dass das Stellglied (26) auf eine Stirnfläche des Dichtelements (10) drückt, zur Festlegung einer der vorbestimmten Dichtwirkung entsprechenden Position des Dichtelements (10) innerhalb der Führung (24) in Verschieberichtung der Linearführung (20).

## Claims

1. Guide carriage (22; 23) for a linear guide (20), wherein a guide (24) for a sealing element (10) is provided on the guide carriage (22; 23), wherein the sealing element (10) comprises at least one sealing lip (11) which is arranged on a first side (12) of the sealing element and which is designed in order to provide a seal with respect to a guide rail (21) of the linear guide (20); and a second side (13) of the sealing element, which side faces away from the first side (12) and is of wedge-shape design in order by positioning the sealing element (10) in a guide (24) provided therefor to obtain a predetermined sealing action of the at least one sealing lip (11), the sealing action corresponding to the positioning, wherein the guide (24) has a wedge-shaped guide portion, the wedge shape of which is formed counter to the wedge-shaped side (13) of the sealing element (10) in order to be able to interact with the wedge-shaped side of the sealing element in such a manner that, by positioning the sealing element (10) along a displacement direction in the guide (24), a predetermined sealing action corresponding to the positioning can be achieved towards a guide rail (21) of the linear guide (20), wherein an adjusting member (26) is arranged on an end-side end plate (25) of the guide carriage (22; 23) in a manner so as, by pressure of the adjusting member (26) on an end surface of the sealing element (10), to bring the sealing element in the guide (24) in the displacement direction of the linear guide (20) into a predetermined position corresponding to a predetermined sealing action.

2. Guide carriage (22; 23) according to Claim 1, wherein the at least one sealing lip (11) is designed to engage around a spring-like projection (28) of the guide rail (21) in the manner of a groove.

3. Guide carriage (22; 23) according to either of the preceding claims, wherein an end surface (15) of the sealing element (10) is designed in order to be able to interact with an adjusting member (26) arranged on an end side so as to bring the sealing element (10) in the guide (24) provided therefor into a predetermined position in the displacement direction of the linear guide (20).

4. Guide carriage (22; 23) according to one of the preceding claims, wherein the sealing element is manufactured from an elastic material, in particular a rubber.

5. Guide carriage (22; 23) according to one of the preceding claims, wherein the adjusting member (26) is a screw, the rotation of which can cause the sealing element (10) to be moved into or out from the guide (24).

6. Linear guide (20) with a guide rail (21) and a guide carriage (22; 23) mounted thereon, wherein at least one guide carriage (22; 23) according to one of Claims 1 to 5 is provided for sealing the linear guide between the guide carriage (22; 23) and the guide rail (21).

7. Linear guide (20) according to Claim 6, wherein the sealing element (10) between the guide carriage (22; 23) and the guide rail (21) is arranged in a guide (24) provided therefor in the guide carriage (22; 23), and wherein the guide (24) has a wedge-shaped guide part, the wedge shape of which is formed counter to the wedge-shaped side of the sealing element, and wherein an adjusting member (26) is arranged on an end-side end plate (25) of the guide carriage (22; 23) in a manner so as, by pressure on an end surface (15) of the sealing element (10), to bring the sealing element in the guide (24) in the displacement direction of the linear guide into a predetermined position corresponding to a predetermined sealing action.

8. Method for sealing a linear guide (20), with the following steps:
arranging a sealing element (10) with at least one sealing lip (11) on a first side (12) and with a wedge-shaped second side (13), which faces away from the first side (12), of the sealing element (10) between a guide rail (21) and a guide carriage (22; 23) in a guide (24) provided therefor in the guide carriage; and bringing about a predetermined sealing action of the sealing element (10) by actuation of an adjusting member (26) which is arranged on an end-side end plate (25) of the guide carriage (22; 23) in such a manner that the adjusting member (26) presses on an end surface of the sealing element (10), for securing a position, corresponding to the predetermined sealing action, of the sealing element (10) within the guide (24) in the displacement direction of the linear guide (20).

## Revendications

1. Chariot de guidage (22; 23) pour guide linéaire (20), un guide (24) pour un élément d'étanchéité (10) étant prévu sur le chariot de guidage (22; 23),
l'élément d'étanchéité (10) présentant au moins une lèvre d'étanchéité (11) disposée sur un premier côté (12) de l'élément d'étanchéité et configurée pour assurer l'étanchéité par rapport à un rail de guidage (21) du guide linéaire (20) et
un deuxième côté (13) de l'élément d'étanchéité, non tourné vers le premier côté (12), étant configuré en biseau pour obtenir par un positionnement de l'élément d'étanchéité (10) dans un guide (24) prévu dans ce but un effet prédéterminé d'étanchéité de la ou des lèvres d'étanchéité (11) qui correspond au positionnement,
le guide (24) présentant une partie de guidage en forme de biseau dont la forme biseautée est complémentaire de celle du côté (13) en biseau de l'élément d'étanchéité (10) pour pouvoir coopérer avec le côté en biseau de l'élément d'étanchéité de telle sorte qu'un positionnement de l'élément d'étanchéité (10) dans une direction de déplacement dans le guide (24) permette d'obtenir un effet prédéterminé d'étanchéité vis-à-vis d'un rail de guidage (21) du guide linéaire (20) en correspondance au positionnement,
un organe d'ajustement (26) étant disposé sur une plaque d'extrémité frontale (25) du chariot de guidage (22; 23) pour, par poussée de l'organe de réglage (26) sur une surface frontale de l'élément d'étanchéité (10), amener l'élément d'étanchéité dans le guide (24) dans une position prédéterminée dans la direction de déplacement du guide linéaire (20) qui correspond à un effet d'étanchéité prédéterminé.

2. Chariot de guidage (22; 23) selon la revendication 1, dans lequel la ou les lèvres d'étanchéité (11) sont configurées pour chevaucher en forme de rainure une saillie élastique (28) du rail de guidage (21).

3. Chariot de guidage (22; 23) selon l'une des revendications précédentes, dans lequel une surface frontale (15) de l'élément d'étanchéité (10) est configurée pour pouvoir coopérer avec un organe de réglage (26) disposé frontalement en vue d'amener l'élément d'étanchéité (10) dans le guide (24) prévu dans ce but dans une position prédéterminée dans la direction de déplacement du guide linéaire (20).

4. Chariot de guidage (22; 23) selon l'une des revendications précédentes, dans lequel l'élément d'étanchéité est réalisé en un matériau élastique et en particulier un caoutchouc.

5. Chariot de guidage (22; 23) selon l'une des revendications précédentes, dans lequel l'organe d'ajustement (26) est une vis dont la rotation permet d'enfoncer l'élément d'étanchéité (10) dans le guide (24) ou de l'en extraire.

6. Guide linéaire (20) doté d'un rail de guidage (21) sur lequel est monté un chariot de guidage (22; 23), au moins un chariot de guidage (22; 23) selon l'une des revendications 1 à 5 étant prévu pour assurer l'étanchéité du guide linéaire entre le chariot de guidage (22; 23) et le rail de guidage (21).

7. Guide linéaire (20) selon la revendication 6, dans lequel l'élément d'étanchéité (10) est disposé entre le chariot de guidage (22; 23) et le rail de guidage (21) dans un guide (24), prévu dans ce but, du chariot de guidage (22; 23), le guide (24) présentant une partie de guidage en forme de biseau dont la forme biseautée est complémentaire de la forme du biseau de l'élément d'étanchéité, un organe d'ajustement (26) étant disposé sur une plaque d'extrémité frontale (25) du chariot de guidage (22; 23) pour, par poussée de l'organe de réglage (26) sur une surface frontale de l'élément d'étanchéité (10), amener l'élément d'étanchéité dans le guide (24) dans une position prédéterminée dans la direction de déplacement du guide linéaire (20) qui correspond à un effet d'étanchéité prédéterminé.

8. Procédé pour assurer l'étanchéité d'un guide linéaire (20), le procédé présentant les étapes suivantes :
placement d'un élément d'étanchéité (10) présentant au moins une lèvre d'étanchéité (11) sur un premier côté (12), un deuxième côté (13) en forme de biseau, non tourné vers le premier côté (12), de l'élément d'étanchéité (10) étant disposé entre un rail de guidage (21) et un chariot de guidage (22; 23), dans un guide (24), prévu dans ce but, du chariot de guidage et
obtention d'un effet prédéterminé d'étanchéité de l'élément d'étanchéité (10) par actionnement d'un organe de réglage (28) disposé sur une plaque d'extrémité frontale (25) du chariot de guidage (22; 23) de telle sorte que l'organe de réglage (26) repousse une surface frontale de l'élément d'étanchéité (10) pour fixer à l'intérieur du guide (24) et dans la direction de déplacement du guide linéaire (20) une position de l'élément d'étanchéité (10) qui correspond à l'effet d'étanchéité prédéterminé.
